# EUROPÄISCHE PATENTSCHRIFT

(11) **EP 0 360 740 B1**
(45) Veröffentlichungstag und Bekanntmachung des Hinweises auf die Patenterteilung: **22.06.1994**
(21) Anmeldenummer: 89810650.5
(22) Anmeldetag: 01.09.1989
(51) Int. Cl.: C08K 3/30

(54) **Neue Stoffzusammensetzungen enthaltend Molybdändisulfid**
Compositions containing molybdenum disulfide
Compositions de matière contenant du bisulfure de molybdène

(30) Priorität: 09.09.1988 CH 3373/88
(43) Veröffentlichungstag der Anmeldung: 28.03.1990
(73) Patentinhaber: CIBA-GEIGY AG, 4002 Basel (CH)
(72) Erfinder: Bäbler, Fridolin, Dr., CH-1723 Marly (CH)

(56) Entgegenhaltungen:
- EP-A- 0 010 845
- EP-A- 0 101 667
- US-A- 2 945 770
- CHEMICAL ABSTRACTS, Band 103, Nr. 20, 18. November 1985, Seite 78,Zusammenfassung Nr. 161940s, Columbus, Ohio, US;& JP-A-60 94 466

## Beschreibung

Die vorliegende Erfindung betrifft neue zu Formteilen verarbeitbare Stoffzusammensetzungen enthaltend als Farbkomponente Molybdändisulfid in Kombination mit mindestens einem anorganischen oder organischen Pigment und/oder einem polymerlöslichen Farbstoff und/oder einem Perlglanzpigment.

Es is gemäss US-PS Nr. 4,477,608 bereits bekannt, durch Verwendung eines Gemisches aus Graphit und einem oder mehreren Pigmenten oder polymerlöslichen Farbstoffen zu Formteilen verarbeitbares hochmolekulares Material einzufärben. Damit können zwar neuartige Farbnuancen mit Seidenglanzeffekten erzielt werden, die so erhaltenen Nuancen sind jedoch wegen der grauschwarzen Eigenfarbe des verwendeten Graphits relativ dunkel.

Ausserdem ist es gemäss US-PS Nr. 2,945,770 bekannt, Molybdändisulfid als Perlglanzpigment z.B. zum Färben von Polymethylmethacrylat mit einer dunkelblauen perlmuttartigen Farbnuance einzusetzen. Mit derartigen Kompositionen können jedoch nur dunkelblaue bis schwarze Formteile hergestellt werden.

Es wurde nun gefunden, dass sich zu Formteilen verarbeitbares hochmolekulares organisches Material mit hellen metallischen Farbeffekten einfärben lässt, wenn als farbgebende Komponente eine bestimmte Menge Molybdändisulfid und mindestens ein organisches oder anorganisches Pigment und/oder ein polymerlöslicher Farbstoff und/oder ein Perlglanzpigment verwendet werden. Dabei können metallische Farbeffekte hoher Reinheit und mit deutlich helleren Nuancen als entsprechende Kombinationen mit Graphit hergestellt werden. Ausserdem können damit kleinere Mengen an Pigmenten oder Farbstoffen als mit Graphit eingesetzt werden, was bei der Verformung oft einen günstigen Einfluss auf die Schmelzindices der Polymerschmelze bewirkt.

Die Erfindung betrifft demnach zu Formteilen verarbeitbare Stoffzusammensetzungen enthaltend als hochmolekulares organisches Material einen Thermoplast, oder einen Duroplast oder ein Elastomer und als farbgebende Komponente 0,001 bis 3,0 Gew.% Molybdändisulfid, bezogen auf das hochmolekulare organische Material, in Kombination mit mindestens einem anorganischen oder organischen Pigment und/oder einem polymerlöslichen Farbstoff und/oder einem Perlglanzpigment.

Unter Formteilen versteht man insbesondere unter orientierender Beanspruchung erhältliche Formteile, wie Spritz-, Giess- und Presslinge, Bänder, Fasern und Walzfolien. Zu Formteilen verarbeitbare Thermoplaste, Duroplaste oder Elastomere sind z.B. Zelluloseether, Zelluloseester, wie Ethylzellulose, ferner lineare oder vernetzte Polyurethane, lineare, vernetzte oder ungesättigte Polyester, Polycarbonate, Polyolefine, wie Polyethylen, Polypropylen, Polybutylen oder Poly-4-methylpenten-1, Polystyrol, Polysulfone, Polyamide, Polycyclamide, Polyimide, Polyether, Polyetherketone, wie Polyphenylenoxide, ferner Poly-p-xylylen, Polyvinylhalogenide, wie Polyvinylchlorid, Polyvinylidenchlorid- oder -fluorid, Polytetrafluorethylen, Polyacrylnitril, Acrylpolymerisate, Polyacrylsäureester, Polymethacrylsäureester, Gummi, Silikonpolymere, Phenolformaldehydharze, Melaminformaldehydharze, Harnstofformaldehydharze, Epoxydharze, Styrol-Butadien-Kautschuk, Acrylnitril-Butadien-Kautschuk, Chloropren-Kautschuk, einzeln oder in Mischungen.

Bevorzugt enthalten die erfindungsgemässen Stoffzusammensetzungen einen Thermoplast, insbesondere Polyvinylchlorid, Polyethylen, Polypropylen, Polystyrol, Polycarbonat, Polyacrylsäureester, Polymethacrylsäureester, Polyamid, lineare Polyester, Polyether, lineares Polyurethan, oder deren Copolymere. Ganz bevorzugt ist Polyvinylchlorid, Polycarbonat, Polyester und Polymethylmethacrylat.

Enthält die erfindungsgemässe Stoffzusammensetzung einen polymerlöslichen Farbstoff, so verwendet man als hochmolekulares organisches Material insbesondere einen transparenten Thermoplast, wie beispielsweise Polystyrol, Polymethylmethacrylat oder Polycarbonat.

Als Molybdändisulfid eignet sich insbesonders Molybdändisulfid in Schuppen- oder Plättchenform mit einem Teilchen-Durchmesser von weniger als 100 »m und einer Dicke von bis zu 4 »m.

Die optimalen metallischen Farbeffekte lassen sich durch Variieren der Molybdändisulfidmenge innerhalb des angegebenen Bereiches festlegen. Bevorzugt verwendet man 0,01 bis 1,0 Gew.% Molybdändisulfid, bezogen auf das hochmolekulare organische Material.

Besonders bevorzugt eignet sich schuppen- oder plättchenförmiges Molybdändisulfid mit 60-95 Gew.% der Partikeln, die einen Medianwert von 1-12 »m aufweisen. Zweckmässig weisen sie eine Grösse von 0,1 bis 24 »m auf.

Beispiele von organischen Pigmenten sind Azo-, Azomethin-, Methin-, Anthrachinon-, Phthalocyanin-, Perinon-, Perylen-, Dioxazin-, Diketopyrrolopyrrol-, Thioindigo-, Iminoisoindolin-, Iminoisoindolinon-, Chinacridon-, Chinacridonchinon-, Flavanthron-, Indanthron-, Anthrapyrimidin- oder Chinophthalonpigmente, ferner Metallkomplexe von z.B. Azo-, Azomethin- oder Methinfarbstoffen. Besonders gut geeignet sind Pigmente mit guter Hitzebeständigkeit. Bevorzugte organische Pigmente sind Phthalocyanine, Anthrachinone, Perylene, Diketopyrrolopyrrole, Iminoisoindolinone, Chinacridone, Indanthrone und Disazopigmente.

Beispiele von anorganischen Pigmenten sind Metalloxide, wie Eisenoxid, Antimongelb, Bleichromate, Bleichromatsulfate, Bleimolybdate, Ultramarinblau, Kobaltblau, Manganblau, Chromoxidgrün, Chromoxidhydratgrün, Kobaltgrün, ferner Metallsulfide, wie Cadmiumsulfid, Zinksulfid, Antimontrisulfid und Cadmiumsulfoselenide. Bevorzugte anorganische Pigmente sind z.B. Bleichromate, Bleichromatsulfate, Bleimolybdate und Eisenoxide.

Als polymerlösliche Farbstoffe eignen sich beispielsweise Dispersionsfarbstoffe, vorzugsweise solche der Anthrachinonreihe, beispielsweise Hydroxy-, Amino-, Alkylamino-, Cyclohexylamino-, Arylamino-, Hydroxyamino- oder Phenylmercaptoanthrachinone, sowie Metallkomplexe von Azofarbstoffen, insbesondere 1:2-Chrom- oder Kobaltkomplexe von Monoazofarbstoffen, ferner Fluoreszenzfarbstoffe, wie solche aus der Cumarin-, Naphthalimid-, Pyrazolin-, Acridin-, Xanthen-, Thioxanthen-, Oxazin-, Thiazin- oder Benzthiazolreihe.

Beispiele von Perlglanzpigmenten sind natürliche und künstliche Perlglanzpigmente, wie die silbrig-weissen Perglanzpigmente, wie z.B. die sogenannten natürlichen "Fischsilber", oder als synthetische Perglanzpigmente basisches Bleicarbonat, Wismuthoxidchlorid, Wismuthoxidchlorid auf Träger und insbesonders die Titandioxid-Glimmer-Pigmente, wobei die letzteren auch andere bunte Metalloxide, wie Eisen-, Kobalt-, Mangan- oder Chromoxide, enthalten können.

Die erfindungsgemässen Stoffzusammensetzungen enthalten neben dem Molybdändisulfid bevorzugt nur ein organisches Pigment oder nur einen polymerlöslichen Farbstoff, insbesondere aber nur ein organisches Pigment, vor allem ein transparentes organisches Pigment.

In der erfindungsgemässen Zusammensetzung liegt das neben Molybdändisulfid vorhandene Pigment oder der Farbstoff oder das Perlglanzpigment bevorzugt in einer Menge von 0,001 bis 10 Gew.%, insbesondere von 0,01 bis 3 Gew.%, bezogen auf das hochmolekulare organische Material, vor.

Ausgehend vom handelsüblichen Molybdändisulfid lässt sich Molybdändisulfid in der bevorzugten Teilchenbeschaffenheit auf bekannte Art erhalten, wie beispielsweise durch Mahlen in Luftstrahl-, Sand- oder Kugelmühlen. So erhält man ausgeprägt flächige, plättchen- oder schuppenförmige Molybdändisulfidteilchen, beispielsweise durch Nassmahlung von grobkristallinem Molybdändisulfid in einer Mahlvorrichtung, die Metall-, Glas- oder Porzellankugeln, Kunststoffgranulat oder Sandkörner als Mahlkörper enthält. Diese Mahlkörper werden dabei beispielsweise durch Rotation des Gefässes, oder durch Schwingungserzeuger oder Rührer in Bewegung gesetzt.

Es kann von Vorteil sein, das Pigment und/oder den polymerlöslichen Farbstoff und/oder das Perlglanzpigment und/oder Molybdändisulfid vor der Verwendung für die erfindungsgemässe Stoffzusammensetzung mit einem Texturschutzmittel zu behandeln. Bevorzugt verwendet man ein Molybdändisulfid, das mit einem Texturschutzmittel behandelt wurde, beispielsweise vor, während oder nach dessen Behandlung/Zerkleinerung. Dabei verwendet man bevorzugt 0,02 bis 25 Gew.% eines Texturschutzmittels, bezogen auf die eingesetzte Molybdändisulfidmenge.

Geeignete Texturschutzmittel sind beispielsweise Fettsäuren mit mindestens 12 C-Atomen, wie Stearinsäure oder Behensäure, deren Amide, Salze oder Ester, wie Magnesiumstearat, Zinkstearat, Aluminiumstearat oder Magnesiumbehenat, ferner quartäre Ammoniumverbindungen, wie Tri(C₁-C₄)-alkylbenzylammoniumsalze, ferner Weichmacher, wie epoxidiertes Sojabohnenöl, Wachse, wie Polyethlenwachs, Harzsäuren, wie Abietinsäure, Kolophoniumseife, hydriertes oder dimerisiertes Kolophonium, ferner C₁₂-C₁₈-Paraffindisulfonsäuren, Alkylphenole, Alkohole, Diole oder Polyole mit mindestens 5 C-Atomen.

Die erfindungsgemässen Stoffzusammensetzungen enthalten bevorzugt ein mit Stearinsäure, Stearylamin, hydrierter Abietinsäure, epoxidiertem Sojabohnenöl oder einem 1,2-Diol, insbesondere mit Hexandiol-(1,2), Octandiol-(1,2) oder Dodecandiol-(1,2), behandeltes Molybdändisulfid.

Die erfindungsgemässen Stoffzusammensetzungen können nach bekannten Methoden hergestellt werden. Molybdändisulfid und Pigment bzw. Farbstoff können einzeln oder vorgemischt als Toner bzw. als Lösung oder Dispersion oder in Form von Präparaten zum hochmolekularen organischen Material zugegeben werden. Dabei kann man je nach Verwendungszweck der erfindungsgemässen Stoffzusammensetzung noch weitere Stoffe zufügen, wie beispielsweise Lichtschutzmittel, Hitzestabilisatoren, Weichmacher, Bindemittel oder Füllstoffe.

Mit den feinkristallinen schuppen- bzw. plättchenförmigen Molybdändisulfidpartikeln in der erfindungsgemässen Stoffzusammensetzung erzielt man einen gleichmässig metallisch schimmernden Glanz. Dieser Effekt ist besonders ausgeprägt, wenn die erfindungsgemässe Stoffzusammensetzung von direktem Licht aus einer künstlichen Lichtquelle oder von der Sonne beschienen wird.

Die erfindungsgemäss erzielten Glanzeffekte können von auf andere Art erzielten Effekten deutlich unterschieden und beispielsweise mit einem Goniophotometer gemessen werden.

Die Verwendung von Molybdändisulfid gemäss der vorliegenden Erfindung ist wirtschaftlich. Die Hitze-, Licht- und Wetterbeständigkeit von Molybdändisulfid selbst sowie dessen Kombination mit den Pigmenten oder polymerlöslichen Farbstoffen sind ausgezeichnet. Ausserdem lässt sich Molybdändisulfid insbesondere dank seinen Schmiermitteleigenschaften sehr gut in das organische Material einarbeiten und verursacht nur eine geringe Abnützung der Einarbeitungsapparaturen (insbesondere Extruder) und praktisch keine Bremswirkung. Vor allem erhält man gleichmässige helle, opake Färbungen mit hoher Reinheit. Auch die elektrischen Eigenschaften des damit eingefärbten Kunststoffs werden infolge der geringen elektrischen Leitfähigkeit von Molybdändisulfid nicht beeinflusst.

In Gegensatz zu vielen, insbesondere organischen Pigmenten zeigt ferner Molybdändisulfid in Polyolefinen praktisch keine Verzugserscheinungen. In Engineering Plastics, wie z.B. Polycarbonat, eingearbeitet, erlauben die erfindungsgemässen Kombinationen die Herstellung von Formteilen mit guter Kerbschlagzähigkeit.

In den folgenden Beispielen bedeuten Teile, sofern nicht anders angegeben, Gewichtsteile.

Beispiel 1: In einer 500 ml fassenden Glasperlmühle werden 15,5 g Molybdändisulfid der Firma FLUKA AG mit einer Teilchengrösse von kleiner als 350 »m, und 0,5 g Octandiol-1,2 in 120 ml Wasser verrührt. Man gibt 400 g Glaskugeln mit einem Durchmesser von 3,5-4,0 mm zur Suspension und mahlt die Mischung während 9 Stunden bei einer Temperatur von ca. 20°C und einer Rührgeschwindigkeit von 320 U/Min. Die Umlaufgeschwindigkeit des verwendeten Metallflügelrührers (5,5 cm Durchmesser) beträgt 0,92 m/Sek. Die Molybdändisulfidsuspension wird von den Glaskugeln abgetrennt, welche dann mit Wasser etwas nachgewaschen, dann abfiltriert werden. Man wäscht den Rückstand mit kaltem Wasser und trocknet ihn bei 70-80°C im Vakuumtrockenschrank. Man erhält 15,2 g eines grauen Molybdändisulfids, welches sich nach dem Pulverisieren einwandfrei in Kunststoffe einarbeiten lässt und grau schimmernde Färbungen ausgzeichneter Beständigkeit ergibt. Rasterelektronenmikroskopische Aufnahmen des so konditionierten Molybdändisulfids zeigen Partikel mit einem ausgeprägten schuppen- bis plättchenförmigen Aussehen. Eine Teilchengrössebestimmung, ausgeführt auf dem Gerät Granulometer 715E 598 der Firma CILAS, Marcoussis/FR, ergibt einen Partikelanteil von 85 % der Grösse 6 bis 24 »m und mit einem Medianwert von 9,6 »m.

Beispiel 2: 63,0 g Polyvinylchlorid LONZAVYL E 722® (LONZA AG), 3,0 g REOPLAST 39® (epoxidiertes Sojabohnenöl,CIBA-GEIGY AG), 1,5 g IRGASTAB BG-26®, 0,5 g IRGASTAB CH-300® (Barium-Cadmium-Stabilisatoren, beide CIBA-GEIGY AG), 32,0 Teile Dioctylphthalat, 0,25 g des nach Beispiel 1 behandelten Molybdändisulfids und 0,25 g C.I. Pigment Blau 15:3, Nr. 74160, werden zusammen in einem Becherglas von Hand mit einem Rührstab gut vermischt. Die Mischung wird dann auf einem Zweiwalzenlabormischwalzwerk bei einer Temperatur von 160°C, einer Umdrehungszahl von 25 U/Minute und einer Friktion von 1:1,2 während 8 Minuten durch ständiges Umlegen, Abnehmen und Aufgeben zu einer Weich-PVC-Folie mit einer Schichtdicke von ca. 0,4 mm ausgewalzt. Die so erhaltene Weich-PVC-Folie weist eine farbstarke, gleichmässig schimmernde blaue Färbung mit ausgezeichneten Hitze-, Licht- und Migrationsbeständigkeiten auf.

Beispiel 3: Verfährt man auf analoge Art wie in Beispiel 2 beschrieben, verwendet aber anstelle von C.I. Pigment Blau 15:3 C.I. Pigment Gelb 128, so erhält man eine deckende, gleichmässig schimmernde grüngefärbte Folie, welche sehr gute Hitze-, Licht- und Wetterbeständigkeit aufweist.

Beispiel 4: Verfährt man auf analoge Art wie in Beispiel 2 beschrieben, verwendet aber anstelle von C.I. Pigment Blau 15:3 C.I. Pigment Rot 177, so erhält man eine farbstarke, gesättigte, gleichmässig schimmernde rotviolette Folie mit ebensoguten Eigenschaften.

Beispiel 5: Verfährt man auf analoge Art wie in Beispiel 2 beschrieben, verwendet aber anstelle von C.I. Pigment Blau 15:3 das Isoindolinonpigment C.I. Pigment Gelb 110, so erhält man eine Weich-PVC-Folie mit grünstichig gelber, gleichmässig schimmernder Färbung mit ausgezeichneten Licht-, Hitze-, Wetter- und Migrationsbeständigkeiten.

Beispiel 6: Eine Mischung von

| | | |
|---|---|---|
| 92,0 g | Vinylharz Vinnol H65D® | (Wacker, München) |
| 8,0 g | Vinylcopolymerisat Vestolit HIS 7587® | (HUELS) |
| 1,5 g | Weichmacher Reoplast 39® (epoxidiertes Sojabohnenöl) | (CIBA-GEIGY AG) |
| 1,4 g | Stabilisator IRGASTAB BC-10® (Barium-Cadmium-Stabilisator) | (CIBA-GEIGY AG) |
| 1,4 g | Stabilisator IRGASTAB BC-29® (Barium-Cadmium-Stabilisator) | (CIBA-GEIGY AG) |
| 0,7 g | Hilfsstabilisator IRGASTAB CH-300® (organisches Phosphit) | (CIBA-GEIGY AG) |
| 0,4 g | Gleitmittel IRGAWAX 370® (Fettsäureester) | (CIBA-GEIGY AG) |
| 0,2 g | Gleitmittel IRGAWAX 360® (Paraffinölbasis) | (CIBA-GEIGY AG) |
| 0,25 g | Lichtschutzmittel TINUVIN 320® (Benztriazolderivat) | (CIBA-GEIGY AG) |

wird in einem Fluidmischer (Firma Papenmeier K.G., Detmold) durch Verrühren innert ca. 5 Minuten bei einer Geschwindigkeit von 1400 U/Min. hergestellt.

1,5 g der so hergestellen Hart-PVC-Mischung, 0,05 g eines gut dispergierbaren Perylentetracarbonsäuredianhydridpigmentes und 0,025 g des nach Beispiel 1 erhaltenen Molybdändisulfidpigmentes werden in einem Henschelmischer (Henschelwerke GmbH, Kassel) bei einer Geschwindigkeit von ca. 2000 U/Min. bei Raumtemperatur während ca. 3 Min. vermischt. Auf einem Mischwalzwerk wird die so pigmentierte Hart-PVC-Mischung bei 190°C während 6 Minuten mit 25 U/Min. und einer Friktion von 1:1,2 gewalzt und bei 190°C während 6 Minuten auf einer Bürkle-Presse zwischen verchromten Stahlplatten zu einer Schichtdicke von ca. 1 mm verpresst. Man erhält einen gleichmässig schimmernden, braunrot gefärbten Pressling, der hervorragende Licht- und Wetterbeständigkeiten aufweist.

Beispiel 7: Verfährt man auf analoge Art wie in Beispiel 6 beschrieben, verwendet aber anstelle von Perylentetracarbonsäuredianhydrid ein Bleichromat Gelb C.I. Pigment Gelb 34, so erhält man einen gleichmässig schimmernden, grünstichig gelben Pressling mit ebensoguten Eigenschaften.

Beispiel 8: Eine Mischung von 0,5 g des nach Beispiel 1 erhaltenen Molybdändisulfidpigmentes, 0,5 g Isoindolinonpigment C.I. Pigment Gelb 110, 1,0 g Antioxidans IRGANOX 1010® (CIBA-GEIGY AG) und 1000 g Polyethylen-HD-Granulat VESTOLEN A6016® (Firma Hüls) wird während 15 Minuten in einer Glasflasche auf einer Rollbank vorgemischt. Danach wird die Mischung in zwei Passagen auf einem Einwellenextruder extrudiert, und das so erhaltene Granulat wird auf der Spritzgussmaschine (Allround Aarburg 200) bei 220°C zu Platten verspritzt und während 5 Minuten bei 180°C nachgepresst. Die Pressplatten weisen eine schimmernde grüne Färbung mit ausgezeichneten Echtheiten auf.

Beispiel 9: Verfährt man auf analoge Art wie in Beispiel 8 beschrieben, verwendet aber anstelle von C.I. Pigment Gelb 110 das anthrachinoide Pigment C.I. Pigment Blau 60, so erhält man Pressplatten mit einer schimmernden blauen Nuance und ebensoguten Beständigkeiten.

Beispiel 10: Verfährt man auf analoge Art wie in Beispiel 8 beschrieben, verwendet aber anstelle von 1000 g VESTOLEN A6016® 1000 g Polystyrolgranulat Polystyrol 165 H® (Firma BASF) und anstelle von 0,5 g 0,25 g des nach Beispiel 1 erhaltenen Molybdändisulfids, sowie anstelle von C.I. Pigment Gelb 110 Kupferphthalocyanin-tetrasulfonsäure-(3-methoxypropyl)amid, so erhält man Presslinge mit einer schimmernden dunkelblauen Nuance und ausgezeichneten Beständigkeiten.

Beispiel 11: Eine Mischung von 0,25 g des nach Beisiel 1 erhaltenen Molybdändisulfids, 0,5 g Kupferphthalocyanin-tetrasulfonsäure-(3-methoxypropyl)amid, 1,0 g Antioxdans IRGANOX 3000W® (CIBA-GEIGY AG) und 1000 g Polycarbonat MACROLON 3000W® (BAYER) wird während 15 Minuten in einer Glasflasche auf einer Rollbank vorgemischt. Danach wird die Mischung auf einem Einwellenextruder in einer Passage extrudiert und granuliert. Das so erhaltene Granulat wird auf der Spritzgussmaschine bei einer Verweilzeit von 5 Minuten bei 250°C zu 1,5 mm dicken Pressplatten verspritzt. Die Pressplatten weisen eine schimmernde blaue Nuance mit ausgezeichneten Beständigkeiten aus.

Beispiel 12: Verwendet man anstelle von Kupferphthalocyanin-tetrasulfonsäure-(3-methoxypropyl)amid das Isoindolinonpigment C.I. Pigment Gelb 110 und verfährt sonst nach der in Beispiel 11 beschriebenen Art, so erhält man Pressplatten mit einer schimmernden grünen Nuance mit ausgezeichneten Beständigkeiten.

Wird anstelle von C.I. Pigment Gelb 110 das Metallkomplex C.I. Solvent Rot 7 verwendet, so erhält man Pressplatten mit einer schimmernden rotvioletten Nuance ausgezeichneter Beständigkeiten.

Beispiel 13: Verwendet man anstelle von Kupferphthalocyanin-tetrasulfonsäure-(3-methoxypropyl)amid das anthrachinoide Pigment C.I. Pigment Rot 177, sowie anstelle von 0,25 g 0,5 g des nach Beispiel 1 erhaltenen Molybdändisulfids und verfährt sonst nach der in Beispiel 11 beschriebenen Art, so erhält man Presslinge mit einer schimmernden, rotvioletten Nuance mit ausgezeichneten Beständigkeiten.

Wird anstelle von C.I. Pigment Rot 177 das indigoide Pigment C.I. Solvent Rot 181 verwendet, so erhält man Presslinge mit einer schimmernden rotvioletten Nuance mit ausgezeichneten Beständigkeiten.

Beispiel 14: Verwendet man anstelle von MACROLON 3000W® Polyamidgranulat VESTAMID® (Firma Hüls) und verfährt sonst nach der in Beispiel 11 beschriebenen Art, so erhält man gefärbte Polyamidpresslinge mit ähnlich guten Eigenschaften.

Beispiel 15: Verwendet man anstelle von VESTOLEN A6016® Polypropylengranulat MOPLEN S50G® (Firma Montedison) und verfährt sonst nach der in Beispiel 8 beschriebenen Art, so erhält man gefärbte Polypropylenpresslinge mit ähnlich guten Eigenschaften.

Beispiel 16: Eine Mischung von 0,25 g des nach Beispiel 1 erhaltenen Molybdändisulfids, 0,5 g des polymerlöslichen Farbstoffes C.I. Solvent Orange 60, 1,0 g Antioxidans IRGANOX 1010® und 1000 g Polycarbonatgranulat MACROLON 3000W® (Firma BAYER) wird während 15 Minuten in einer Glasflasche auf einer Rollbank vorgemischt. Danach wird die Mischung in einer Passage auf einem Einwellenextruder extrudiert und granuliert. Das so erhaltene gefärbte Granulat wird auf einer Spritzgussmaschine bei einer Verweilzeit von 5 Minuten bei 290°C zu 1,5 mm dicken Pressplatten verspritzt. Die Pressplatten weisen eine schimmernde braune Nuance mit ausgezeichneten Beständigkeiten auf.

Wird anstelle von Polycarbonatgranulat Polymethylmethacrylatgranulat DEGALAN G7® verwendet und bei 220°C (anstatt bei 290°C) verspritzt, so erhält man Pressplatten mit einer schimmernden braunen Nuance mit ausgezeichneten Beständigkeiten.

Beispiel 17: Verfährt man analog wie in Beispiel 2 beschrieben, verwendet aber anstelle von C.I. Pigment Blau 15:3 (Nr. 74160) das Iminoisoindolinpigment der Formel 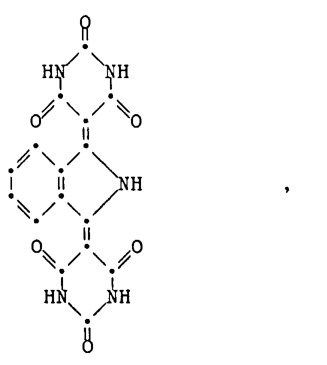
so erhält man eine gleichmässig grünstichig gelbe schimmernde Folie mit analog guten Eigenschaften.

Beispiel 18: Verfährt man analog wie in Beispiel 2 beschrieben, verwendet aber anstelle von C.I. Pigment Blau 15:3 (Nr. 74160) das Diketopyrrolopyrrolpigment C.I. Pigment Rot 254, so erhält man eine gleichmässig bräunlichrote schimmernde Folie mit analog guten Eigenschaften.

Beispiel 19: Eine Mischung von 100 g Polyethylenterephtalatgranulat TERLENKA® (Firma AKZ0-Fibers, Holland), 0,1 g des nach Beispiel 1 erhaltenen Molybdändisulfids und 0,1 g Chinacridonpigment C.I. Pigment Violett 19 werden während 15 Minuten in einer Glasflasche auf einer Rollbank gemischt. Auf einem Laborextruder Typ 25/25D/T der Firma COLLIN GmbH, München, wird die Mischung zu einem Band extrudiert. Man erhält ein gleichmässig schimmerndes violett gefärbtes Band, welches eine ausgezeichnete Lichtbeständigkeit aufweist.

Beispiel 20: Verfährt man analog wie in Beispiel 19 beschrieben, verwendet aber anstelle von TERLENKA® das Polyurethan APILON 52-651® der Firma API spa, Mussolente, Italien, und anstelle von C.I. Pigment Violett 19 das Dichlorchinacridon C.I. Pigment Rot 209, so erhält man ein gleichmässig schimmerndes PUR-Band rotvioletter Färbung, welches eine ausgezeichente Lichtbeständigkeit aufweist.

Beispiel 21: Verfährt man analog wie in Beispiel 19 beschrieben, verwendet aber anstelle von TERLENKA® ein Polyphenylenether/Polyamid-Blend ULTRANYL KR 4510® und anstelle von C.I. Pigment Violett 19 das Cu-Phthalocyaninpigment C.I. Pigment Blau 15:3, so erhält man ein gleichmässig schimmerndes blaugefärbtes Band mit ausgezeichneten Beständigkeiten.

Beispiel 22: Verfährt man analog wie in Beispiel 2 beschrieben, verwendet aber anstelle von 0,25 g 0,1 g Molybdändisulfid und anstelle von 0,25 g C.I. Pigment Blau 15:3 (Nr. 74160) 0,5 g des Perlglanzpigmentes IRIODIN Ti-100F® (Merck), so erhält man eine grau metallisch glänzende Folie mit ausgezeichneten Beständigkeiten.

Beispiel 23: Verfährt man analog wie in Beispiel 22, verwendet aber zur Einfärbung zusätzlich 0,15 % des Azopigmentes C.I. Pigment Rot 221, so erhält man eine gleichmässig schimmmernde rotviolette Folie mit analog guten Eigenschaften.

## Patentansprüche

1. Zu Formteilen verarbeitbare Stoffzusammensetzungen enthaltend als hochmolekulares organisches Material einen Thermoplast, oder einen Duroplast oder ein Elastomer und als farbgebende Komponente 0,001 bis 3,0 Gew.% Molybdändisulfid, bezogen auf das hochmolekulare organische Material, in Kombination mit mindestens einem anorganischen oder organischen Pigment und/oder einem polymerlöslichen Farbstoff und/oder einem Perlglanzpigment, worin das Molybdändisulfid in Schuppen- oder Plättchenform mit einem Teilchendurchmesser von Weniger als 100 »m und einer Dicke von bis zu 4 »m vorliegt, und wobei der Anteil der Partikel des Molybdändisulfids mit einer Grösse von 0,1-24 »m 60-95 Gew.% beträgt und dieser Anteil einen Medianwert von 1 bis 12 »m aufweist.

2. Stoffzusammensetzungen gemäss Anspruch 1, worin das hochmolekulare organische Material ein Thermoplast ist.

3. Stoffzusammensetzungen gemäss Anspruch 1, worin das hochmolekulare organische Material ein Polyvinylchlorid, Polyethylen, Polypropylen, Polystyrol, Polycarbonat, Polyacrylsäureester, Polymethacrylsäureester, Polyamid, linearer Polyester, Polyether, lineares Polyurethan, oder deren Copolymere ist.

4. Stoffzusammensetzungen gemäss Anspruch 1, worin die Molybdändisulfidmenge 0,01 bis 1,0 Gew.%, bezogen auf das hochmolekulare organische Material, beträgt.

5. Stoffzusammensetzungen gemäss Anspruch 1, worin neben dem Molybdändisulfid nur ein organisches Pigment verwendet wird.

6. Stoffzusammensetzungen gemäss Anspruch 1, worin der polymerlösliche Farbstoff ein Anthrachinonfarbstoff oder ein Metallkomplex eines Azofarbstoffes ist.

7. Stoffzusammensetzungen gemäss Anspruch 1, worin Pigment oder Farbstoff oder Perlglanzpigment in einer Menge von 0,001 bis 10 Gew.%, bezogen auf das hochmolekulare organische Material, vorliegt.

8. Stoffzusammensetzungen gemäss Anspruch 1, worin Pigment oder Farbstoff und/oder Perlglanzpigment in einer Menge von 0,01 bis 3 Gew.%, bezogen auf das hochmolekulare organische Material, vorliegt.

9. Stoffzusammensetzung gemäss Anspruch 1, worin mit Stearinsäure, Stearylamin, hydrierter Abietinsäure, epoxidiertem Sojabohnenöl oder einem 1,2-Diol behandeltes Molybdändisulfid vorliegt.

10. Verwendung der Stoffzusammensetzung gemäss Anspruch 1 für die Herstellung von Formteilen.

## Claims

1. A composition which can be processed to moulded articles and which contains, as high molecular weight organic material, a thermoplastic or a thermoset plastic or an elastomer and, as colouring component, 0.001 to 3.0 % by weight of molybdenum disulfide, based on the high molecular weight organic material, in conjunction with at least one inorganic or organic pigment and/or a polymer-solube dye and/or a pearlescent pigment, wherein the molybdenum disulfide is in flake or platelet form having a particle diameter of less than 100 »m and a thickness of up to 4 »m, and where the proportion of molybdenum disulfide having a size of 0.1-24 »m is 60-95 % by weight and this proportion has a median size of 1 to 12 »m.

2. A composition according to claim 1, wherein the high molecular weight organic material is a thermoplastic.

3. A composition according to claim 1, wherein the high molecular weight organic material is a polyvinyl chloride, polyethylene, polypropylene, polystyrene, polycarbonate, polyacrylic ester, polymethacrylic ester, polyamide, linear polyester, polyether, linear polyurethane, or a copolymer thereof.

4. A composition according to claim 1, wherein the concentration of molybdenum disulfide is 0.01 to 1.0 % by weight, based on the high molecular weight organic material.

5. A composition according to claim 1, wherein only one organic pigment is used in addition to the molybdenum disulfide.

6. A composition according to claim 1, wherein the polymer-soluble dye is an anthraquinone dye or a metal complex of an azo dye.

7. A composition according to claim 1, which contains the pigment or dye or pearlescent pigment in an amount of 0.001 to 10 % by weight, based on the high molecular weight organic material.

8. A composition according to claim 1, which contains the pigment or dye and/or pearlescent pigment in an amount of 0.01 to 3 % by weight, based on the high molecular weight organic material.

9. A composition according to claim 1, which contains molybdenum disulfide which is treated with stearic acid, stearylamine, hydrogenated abietic acid, epoxidised soya bean oil or a 1,2-diol.

10. Use of a composition according to claim 1 for the fabrication of moulded articles.

## Revendications

1. Compositions de matière transformables en pièces moulées contenant comme matière organique macromoléculaire une matière thermoplastique, une résine thermodurcissable ou un élastomère, et comme constituant colorant 0,001 à 3,0 % en masse de disulfure de molybdène par rapport à la matière organique macromoléculaire, en combinaison avec au moins un pigment inorganique ou organique et/ou un colorant soluble dans les polymères et/ou un pigment nacré, dans lesquelles le disulfure de molybdène est sous forme de flocons ou de paillettes ayant un diamètre de particules inférieur à 100 »m et une épaisseur allant jusqu'à 4 »m, la fraction de particules du disulfure de molybdène ayant une taille de 0,1-24 »m s'élevant à 60-95 % en masse et cette fraction présentant une valeur médiane de 1 à 12 »m.

2. Compositions de matière selon la revendication 1 dans lesquelles la matière organique macromoléculaire est une matière thermoplastique.

3. Compositions de matière selon la revendication 1, dans lesquelles la matière organique macromoléculaire est un poly(chlorure de vinyle), un polyéthylène, un polypropylène, un polystyrène, un polycarbonate, un poly(ester d'acide acrylique), un poly(ester d'acide méthacrylique), un polyamide, un polyester linéaire, un polyéther, un polyuréthane linéaire ou leurs copolymères.

4. Compositions de matière selon la revendication 1, dans lesquelles la quantité de disulfure de molybdène est de 0,01 à 1,0 % en masse par rapport à la matière organique macromoléculaire.

5. Compositions de matière selon la revendication 1, dans lesquelles on n'utilise qu'un pigment organique en plus du disulfure de molybdène.

6. Compositions de matière selon la revendication 1, dans lesquelles le colorant soluble dans les polymères est un colorant anthraquinonique ou un complexe métallique d'un colorant azoïque.

7. Compositions de matière selon la revendication 1, dans lesquelles le pigment ou le colorant ou le pigment nacré se trouve en une quantité de 0,001 à 10 % en masse par rapport à la matière organique macromoléculaire.

8. Compositions de matière selon la revendication 1, dans lesquelles le pigment ou le colorant et/ou le pigment nacré se trouve en une quantité de 0,01 à 3 % en masse par rapport à la matière organique macromoléculaire.

9. Composition de matière selon la revendication 1, contenant du disulfure de molybdène traité avec de l'acide stéarique, de la stéarylamine, de l'acide abiétique hydraté, de l'huile de soja époxydée ou un 1,2-diol.

10. Utilisation de la composition de matière selon la revendication 1 pour la préparation de pièces moulées.
